# EUROPEAN PATENT APPLICATION

(11) **EP 3 907 402 A1**
(43) Date of publication of application: **10.11.2021**
(21) Application number: 20173142.9
(22) Date of filing: 06.05.2020
(51) Int. Cl.: F03D 7/02, F03D 17/00, G06T 7/00, G06T 7/73

(54) **A METHOD AND AN APPARATUS FOR COMPUTER-IMPLEMENTED MONITORING OF A WIND TURBINE**

(71) Applicant: Siemens Gamesa Renewable Energy A/S, 7330 Brande (DK)
(72) Inventor: Gollnick, Bert, 22145 Hamburg (DE); Rasmussen, Bjarne, 7330 Brande (DK)
(74) Representative: Aspacher, Karl-Georg

(57) **Abstract**

The invention refers to a method for computer-implemented monitoring of a wind turbine (10) comprising an upper section (11) on top of a tower. The upper section (11) is pivotable around a vertical yaw axis (VA) and has a nacelle (12) and a rotor (13) with rotor blades, the rotor (13) being attached to the nacelle (12). The rotor blades are rotatable by wind around a substantially horizontal rotor axis (HA), wherein at least at one time point during the operation of the wind turbine (10) the following steps are performed: obtaining an image (IM) of the wind turbine (10), the image (IM) being an aerial view of the wind turbine (10) taken by a camera installed on a satellite or an airborne camera installed on an aircraft; determining a timestamp (TS) when the image (IM) was taken; determining a true north (TN) of the image (IM); determining a first yaw angle (Φ_{IM}) of the wind turbine (10) by processing the image (IM), the first yaw angle (Φ_{IM}) being the angle between the direction of the true north (TN) and the direction of the horizontal rotor axis (HA); obtaining, from a database (DB), a yaw position (Φ_{DB}) of the wind turbine (10) substantially at the time the image (IM) was taken, the yaw position (Φ_{DB}) corresponding to a second yaw angle between the direction of a calibrated north (CN) and the direction of the horizontal rotor axis (HA); and determining a yaw deviation angle (Φ_{delta}) between the first and the second yaw angle.

## Description

The invention refers to a method and an apparatus for computer-implemented monitoring of a wind turbine.

Wind turbines of wind farms comprise an upper section with a rotor and a nacelle on the top of a tower where the upper section can be rotated around a vertical yaw axis in order to vary the yaw angle of the respective turbine. The yaw angle of a wind turbine is usually adjusted such that the rotor of the wind turbine faces the wind. The yaw angle or yaw position is typically stored in a database as time series data for further investigation. To do so, wind sensors (i.e. ane-nometers) are installed on the respective wind turbines to estimate the wind directions.

During commissioning, each wind turbine is aligned with regard to its north direction. The north direction is used to calculate the correct yaw angle with respect to the measurements provided by the wind sensor. During operation of the wind turbine, it may occur that the yaw angle slightly "drifts" due to incorrect measurements. An incorrect alignment of the nacelle and the rotor, respectively, with regard to the north direction results in imprecise load and/or sound control strategies.

It is an object of the present invention to provide an easy method in order to detect yaw misalignments of a wind turbine.

This object is solved by the independent claims. Preferred embodiments of the invention are defined in the dependent claims.

The invention provides a method for computer-implemented monitoring of a wind turbine. The wind turbine comprises an upper section on top of a tower, the upper section being pivotable around a vertical yaw axis and having a nacelle and a rotor with rotor blades. The rotor is attached to the nacelle and the rotor blades are rotatable by wind around a substantially horizontal rotor axis. Actually, the rotor axis may be tilted a bit. The wind turbine may be a wind turbine of a wind farm consisting of a plurality of wind turbines.

According to the method of the invention, the following steps i) to vi) are performed at least at one time point during the operation of the wind turbine.

In step i), an image of the wind turbine, in particular of the upper section of the wind turbine, is obtained. In the following, the term "image" refers to a digital image. The term "obtaining an image" means that the image is received by a processor implementing the method of the invention. The digital image is an aerial view of the wind turbine taken by a camera installed on a satellite or an airborne camera installed on an aircraft, such as a drone or an airplane. The term "camera" refers to an imaging device working in at least a part of the spectrum between ultraviolet and infrared light. E.g., the camera may work in the spectrum of visible light. In a preferred embodiment, the camera works in the infrared spectrum of light so that images may also be obtained at night.

In step ii), a timestamp of the image is determined. The timestamp indicates an information when the image was taken. The information of the timestamp may consist of a date (day and month) and time (hour, minute and second). The term "determining a timestamp" means that the timestamp is received by the processor implementing the method of the invention from a data source, such as a storage device, a data provider or metadata associated with the obtained image.

In step iii), a true north of the image is determined. The true north is also called geodetic north and is the direction along earth's surface towards the geographic North Pole or true North Pole. The term "determining the true north" means that the true north is calculated by the processor implementing the method of the invention or received from a data source, such as the provider of the image or a database.

In step iv), a first yaw angle of the wind turbine is determined by processing the image. The first yaw angle is the angle between the direction of the true north and the direction of the horizontal rotor axis, i.e. the direction of the nacelle.

In step v), a yaw position of the wind turbine substantially at the time the image was taken is obtained from a database. The yaw position corresponds to a second yaw angle between the direction of a calibrated north and the direction of the horizontal rotor axis. The term "obtaining a yaw position" means that the yaw position is received by the processor implementing the method of the invention as result from a retrieval from the database. The calibrated north direction corresponds to the north direction specified during commissioning. The alignment regarding the north direction during commissioning may be made manually by any tool, such as a magnetic compass, by reference to a landmark, such as a church tower, or the location of surrounding wind turbines.

In step vi), a yaw deviation angle is determined between the first and the second yaw angle. If the yaw deviation angle is different from zero, it means that the calibrated north direction specified during commissioning is different compared to the true north. The yaw deviation angle corresponds to a yaw misalignment angle.

The method of the invention provides an easy and straight forward method for determining yaw misalignments based on images of a camera. To do so, an aerial view of the wind turbine is processed to determine the "correct" yaw angle of the wind turbine with respect to the true north. By comparison with the yaw position stored in the database which refers to the calibrated north direction, a north misalignment can be detected. Knowing the north misalignment, the control strategy of the wind turbine can be adapted to achieve effective sound control and/or load control.

In a preferred embodiment of the invention, the first yaw angle is determined by processing the image by a trained data driven model, where the aerial image is fed as a digital input to the trained data driven model and the trained data driven model provides the first yaw angle as a digital output. The model is trained by training data comprising a plurality of aerial images of wind turbines taken by a camera installed on a satellite or an airborne camera installed on an aircraft together with the information about the direction of the horizontal rotor axis and the true north of the image.

Any known data driven model being trained by machine learning may be used in the method according to the invention. In a particularly preferred embodiment, the trained data driven model is a neural network, preferably a Convolutional Neural Network which is particularly suitable for processing image data. Nevertheless, other trained data driven models may also be implemented in the method of the invention, e.g. models based on decision trees, support vector machines or Random Forests.

In a preferred embodiment of the invention, the information based on the yaw deviation angle is output via a user interface. E.g., the yaw deviation angle itself maybe output via the user interface. Alternatively or additionally, a warning may be provided via the user interface in case that the yaw deviation angle is greater than zero or exceeds a predetermined threshold. Thus, a human operator is informed about an unacceptable yaw deviation angle so that he can initiate appropriate counter measures by adjusting the yaw offset angles of the wind turbine or storing the true north instead of the calibrated north in order to enhance operation of the wind turbine. Preferably, the user interface comprises a visual user interface, but it may also comprise a user interface of another type (e.g. an acoustic user interface).

In another preferred embodiment, control commands are generated for a wind turbine so that the upper section of the wind turbine is pivoted around its corresponding yaw axis in a direction by the amount of yaw deviation angle such that the yaw deviation angle becomes zero. This embodiment enables an automatic alignment of the wind turbine with respect to true north. This allows enhanced control of the wind turbine with respect to load control and/or sound control.

In another embodiment, the true north is retrieved from an information associated with the image. Such an information associated with the image is present if the image is taken by a camera installed on a satellite.

Alternatively, the true north maybe calculated from the known position of the wind turbine and the position of another landmark in the image. The landmark may be a further wind turbine which position is known as well. However, the landmark can be any other building, or natural or manmade part as long as precise position coordinates are available. If the locations of the wind turbine and the landmark are known, the true north can be calculated by means of known algorithms.

According to a further preferred embodiment, the timestamp is retrieved from an information associated with the image, such as metadata which are stored together with the image. Alternatively, the timestamp consists of an information about the day and time when the image was taken, where the information about the time is calculated from a shadow created by the wind turbine. The accuracy of this procedure will not be in minutes, however as yawing does not take place very often, the rough information about the time the image was taken can be used in the present method. Time series data acquired during operation of the wind turbine and stored in a database even document the maximum and minimum yaw positions over a time period. In case of large yaw activity around the calculated time for the image taken, the calibration method could reject the result due to uncertainty in data quality. In case of low yaw activity around the calculated time for the image taken, the result could be processed as it can be assumed to be sufficient accurate.

The method as described above may be executed once or a plurality of times for a specific turbine. If a respective yaw deviation angle of a plurality of wind turbines of a wind farm is to be determined, the method is repeated as described above for each wind turbine at least once.

Besides the above method, the invention refers to an apparatus for computer-implemented monitoring of one or more wind turbines where the apparatus is configured to perform the method according to the invention or one or more preferred embodiments of the method according to the invention.

Moreover, the invention refers to a computer program product with program code which is stored on a non-transitory machine-readable carrier, adapted for carrying out the method according to the invention or one or more preferred embodiments thereof when the program code is executed on a computer.

Furthermore, the invention refers to a computer program with a program code for carrying out the method according to the invention or one or more preferred embodiments thereof when the program code is executed on a computer.

An embodiment of the invention will now be described in detail with reference to the accompanying drawings.
- Fig. 1: is a schematic illustration for wind turbine from above illustrating a yaw deviation angle; and
- Fig. 2: is a schematic illustration of an apparatus for computer-implemented monitoring of the wind turbine of Fig. 1.

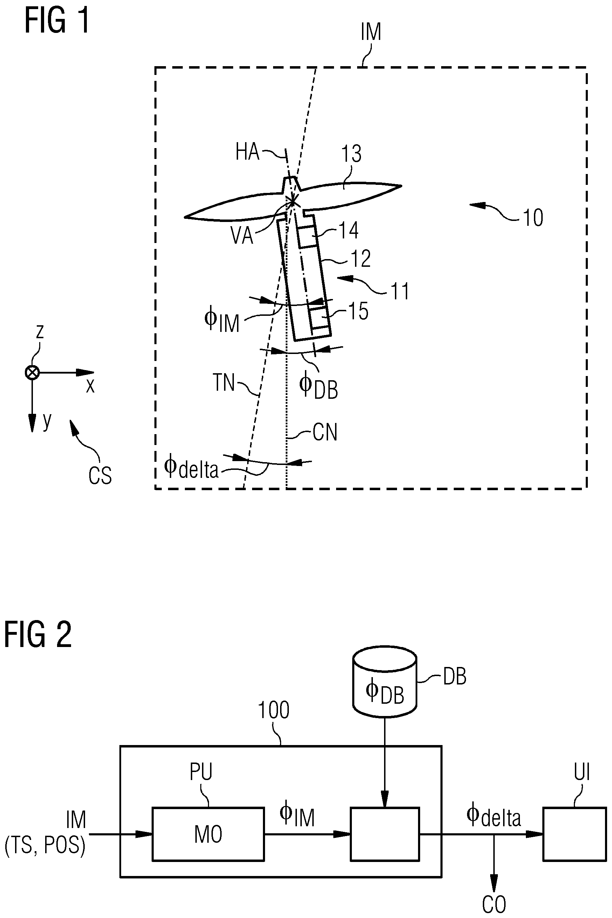

Fig. 1 shows a wind turbine 10. The wind turbine 10 may be a part of a wind farm or may be a single wind turbine. The method described herein may be applied to a single wind turbine and to wind turbines in wind farms as well.

The wind turbine 10 is shown in a plane view from above as it would be on an image taken by a camera installed on a satellite or on an airborne camera installed on an aircraft, such as a drone or an airplane. A 3D coordinate system CS for indicating the spatial arrangement of the wind turbine 10 is part of Fig. 1. The vertical direction is indicated by the z-axis of the coordinate system CS whereas the directions parallel to the horizontal directions are indicated by the x-axis and y-axis of the coordinate system CS.

The wind turbine 10 comprises an upper section 11 being located on top of a tower (not shown) which extends in a vertical z-direction. The upper section comprises a nacelle 12 accommodating an electric generator for generating electricity. Furthermore, the upper section 11 comprises a rotor 13 having three rotor blades with an angle of 120° therebetween where Fig. 1 only shows two of those blades. The rotor 13 is rotated about the substantially horizontal rotor axis HA by wind resulting in the generation of electricity by the generator within the nacelle 12. The upper section 11 of the turbine 10 can be pivoted around the vertical yaw axis VA.

The yaw angle of the upper section 11 and the nacelle 12 around the yaw axis VA is adjusted such that the rotor axis HA corresponds to the wind direction measured by a respective wind sensor 15 installed at or nearby the wind turbine 10.

Besides the wind sensor 15, the turbine 10 is equipped with a number of not shown other sensors 14 for determining operating parameters, such as rotor values (rotor speed, rotor acceleration, rotor azimuth), blade pitch values (pitch angle, pitch speed), blade root moment, produced power and/or torque and tower/nacelle hub acceleration.

The chosen yaw angle Φ_{DB} of the wind turbine 10 results from the measured wind direction and is the angle between the direction of a calibrated north CN and the direction of the horizontal rotor axis HA. The direction of calibrated north CN is determined once during commissioning of the wind turbine 10 and stored in a controller of the wind turbine 10. Calibration is typically done manually by any tool, such as a magnetic compass, a landmark, such as a church tower, or the location of a surrounding wind turbine. The yaw angle Φ_{DB} at a specific timepoint during operation of the wind turbine 10 is called yaw position Φ_{DB} and is stored together with a time of controlling to the respective yaw angle into a database DB (Fig. 2).

However, a chosen yaw angle Φ_{DB} may not be optimal as there may be a drift of the upper section 11 around the vertical yaw axis VA over time. Even small north misalignments result in excessive loads, for example in case of wake, or lead to excessive sound.

The method as described in the following provides an easy method to detect and correct those yaw misalignments. To do so, an image of the wind turbine 10 is obtained where the image IM is an aerial view of the wind turbine 10 as shown in Fig. 1. As already described, the image IM may be taken by a camera installed on a satellite or an airborne camera installed on an aircraft. The camera is working in the visible light spectrum and also in the infrared light spectrum so that the method as described herein may also be performed at night. Alternatively, the camera may be based on radar radiation.

The image IM of the camera is transferred by a suitable communication link to a controller 100 (Fig. 2). The controller 100 may be a controller of a wind farm or any other controller including the controller of the wind turbine 10. The controller 100 comprises a processing unit PU implementing a trained data driven model MO receiving the image IM together with a timestamp TS when the image was taken as a digital input and providing a yaw angle Φ_{IM} as a digital output. The yaw angle Φ_{IM} is the angle between the direction of the true north TN and the direction of the horizontal rotor axis HA. The yaw angle Φ_{IM} (being the first or "correct" yaw angle) is determined by processing the image IM by the trained data driven model MO.

In the embodiment described herein, the trained data driven model MO is based on a Convolutional Neural Network having been trained beforehand by training data. The training data comprise a plurality of aerial views (images) of turbines taken by a camera of a satellite or an airborne camera with the information about the true north TN and the horizontal rotor axis HA occurring in the respective image. Convolutional Neural Networks are well-known from prior art and are particularly suitable for processing digital images. Convolutional Neural Networks comprise convolutional layers followed by pooling layers as well as fully connected layers in order to determine at least one property of the respective image where the property according to the invention is the "correct" yaw angle Φ_{IM}.

Having determined the yaw angle Φ_{IM}, the yaw position Φ_{DB} (also referred to as a second yaw angle) of the wind turbine 10 substantially at the time the image IM was taken is obtained from the database DB. Moreover, a yaw deviation angle Φ_{delta} is determined from the yaw angles Φ_{IM} and Φ_{DB} by calculating the difference.

The yaw deviation angle Φ_{delta} produced as an output is then output on a user interface UI which is only shown schematically in Fig. 2. Preferably, the user interface UI comprises a display. The user interface UI provides information for a human operator. The output based on the yaw deviation angle Φ_{delta} may be the angle itself, so the operator is informed about the misalignment. Alternatively or additionally, the output may be a warning in the case that the yaw deviation angle Φ_{delta} exceeds a predetermined threshold or is different from zero (i.e. in all those cases where the calibrated north direction CN differs from the true north direction TN).

In the embodiment shown in Fig. 2, the yaw deviation angle Φ_{delta} determined by the model MO and resulting from the comparison of the yaw angle Φ_{IM} with the stored yaw position Φ_{DB} may also result in a control command CO which is provided to the wind turbine 10 in order to adjust the actual yaw angle Φ_{DB} to the true north. The control commands CO may be such that the wind turbine 10 is rotated/pivoted around its corresponding yaw axis VA in the direction by the amount of the yaw deviation angle such that the yaw deviation angle Φ_{delta} becomes zero. Hence, the controller 100 enables an automated adjustment of the yaw angle to eliminate a yaw misalignment of the wind turbine 10 due to a wrong north calibration.

The true north TN may be retrieved from an information associated with the image IM used as input to the processor 100. The true north TN information may be part of metadata associated with the image IM in case the image was taken by a satellite mounted camera. If the source of the aerial image IM is a drone or an airplane, the true north direction is not provided. To get the information about the true north TN direction images IM may be taken having besides the wind turbine of interest an additional landmark, such as a church tower or another building or a surrounding wind turbine. If the location of the wind turbine of interest and the landmark are known, the true north TN can be calculated.

Typically, the information about the time when the image IM was taken by the camera is part of the metadata associated with the image. If no detailed timestamp is available, the time of the day can be calculated based on the shadow created by the wind turbine 10. The accuracy of this procedure is not that accurate compared to obtaining the timestamp from metadata. However, this is not a problem as changing the yaw angle does not necessarily take place very often.

The invention as described in the foregoing has several advantages. Particularly, an easy and straightforward method in order to detect yaw misalignments of a wind turbine is provided. To do so, the yaw misalignment is determined based on aerial images of a camera via a suitable trained data driven model. In a preferred embodiment, the yaw angle of the wind turbine is also automatically controlled based on the yaw misalignment determined by the data driven model after a comparison with a stored yaw angle for the time the image was taken in order to enhance control strategies.

## Claims

1. A method for computer-implemented monitoring of a wind turbine (10) comprising an upper section (11) on top of a tower, the upper section (11) being pivotable around a vertical yaw axis (VA) and having a nacelle (12) and a rotor (13) with rotor blades, the rotor (13) being attached to the nacelle (12) and the rotor blades being rotatable by wind around a substantially horizontal rotor axis (HA), wherein at least at one time point during the operation of the wind turbine (10) the following steps are performed:
i) obtaining an image (IM) of the wind turbine (10), the image (IM) being an aerial view of the wind turbine (10) taken by a camera installed on a satellite or an airborne camera installed on an aircraft;
ii) determining a timestamp (TS) when the image (IM) was taken;
iii) determining a true north (TN) of the image (IM);
iv) determining a first yaw angle (Φ_{IM}) of the wind turbine (10) by processing the image (IM), the first yaw angle (Φ_{IM}) being the angle between the direction of the true north (TN) and the direction of the horizontal rotor axis (HA);
v) obtaining, from a database (DB), a yaw position (Φ_{DB}) of the wind turbine (10) substantially at the time the image (IM) was taken, the yaw position (Φ_{DB}) corresponding to a second yaw angle between the direction of a calibrated north (CN) and the direction of the horizontal rotor axis (HA);
vi) determining a yaw deviation angle (Φ_{delta}) between the first and the second yaw angle.

2. The method according to claim 1, wherein the first yaw angle (Φ_{IM}) is determined by processing the image (IM) by a trained data driven model (MO), where the image (IM) is fed as a digital input to the trained data driven model (MO) and the trained data driven model (MO) provides the first yaw angle (Φ_{IM}) as a digital output.

3. The method according to claim 1 or 2, wherein the trained data driven model (MO) is a neural network, preferably a Convolutional Neural Network.

4. The method according to one of the preceding claims, wherein an information based on the yaw deviation angle (Φ_{del-ta}) is output via a user interface (UI).

5. The method according to one of the preceding claims, wherein control commands (CO) are generated for the wind turbine (10) so that the upper section (11) of the wind turbine (10) is pivoted around its corresponding yaw axis (VA) in a direction by the amount of the yaw deviation angle (Φ_{delta}) such that the yaw deviation angle (Φ_{delta}) becomes zero.

6. The method according to one of the preceding claims 1 to 5, wherein the true north (TN) is retrieved from an information associated with the image (IM).

7. The method according to one of the preceding claims 1 to 5, wherein the true north (TN) is calculated from the known position of the wind turbine (10) and the position of another landmark, in particular a further wind turbine, in the image (IM) .

8. The method according to one of the preceding claims 1 to 7, wherein the timestamp (TS) is retrieved from an information associated with the image (IM).

9. The method according to one of the preceding claims 1 to 7, wherein the timestamp (TS) consists of an information about the day and time when the image was taken, the information about the time is calculated from a shadow created by the wind turbine (10).

10. An apparatus for computer-implemented monitoring of a wind turbine (10) comprising an upper section (11) on top of a tower, the upper section (11) being pivotable around a vertical yaw axis (VA) and having a nacelle (12) and a rotor (13) with rotor blades, the rotor (13) being attached to the nacelle (12) and the rotor blades being rotatable by wind around a substantially horizontal rotor axis (HA), wherein the apparatus (100) comprises a processor (PR) configured to perform at least at one time point during the operation of the wind turbine (10) the following steps:
i) obtaining an image (IM) of the wind turbine (10), the image (IM) being an aerial view of the wind turbine (10) taken by a camera installed on a satellite or an airborne camera installed on an aircraft;
ii) determining a timestamp (TS) when the image (IM) was taken;
iii) determining a true north (TN) of the image (IM);
iv) determining a first yaw angle (Φ_{IM}) of the wind turbine (10) by processing the image (IM), the first yaw angle (Φ_{IM}) being the angle between the direction of the true north (TN) and the direction of the horizontal rotor axis (HA);
v) obtaining, from a database (DB), a yaw position (Φ_{DB}) of the wind turbine (10) substantially at the time the image (IM) was taken, the yaw position (Φ_{DB}) corresponding to a second yaw angle between the direction of a calibrated north (CN) and the direction of the horizontal rotor axis (HA);
vi) determining a yaw deviation angle (Φ_{delta}) between the first and the second yaw angle.

11. The apparatus according to claim 10, wherein the apparatus (100) is configured to perform a method according to one of claims 2 to 9.

12. A computer program product with program code, which is stored on a non-transitory machine-readable carrier, adapted for carrying out a method according to one of claims 1 to 9 when the program code is executed on a computer.

13. A computer program with program code for carrying out a method according to one of claims 1 to 9 when the program code is executed on a computer.
